# DEMANDE DE BREVET EUROPEEN

(11) **EP 1 398 265 A1**
(43) Date de publication de la demande: **17.03.2004**
(21) Numéro de dépôt: 02447175.7
(22) Date de dépôt: 12.09.2002
(51) Int. Cl.: B62M 13/04

(54) **Organe de fixation de dispositif d'entrainement de vélo**

(71) Demandeur: Motte dit Falisse, Gilles Jacques Abel Marie, 4102 Ougrée (BE)
(72) Inventeur: Motte dit Falisse, Gilles Jacques Abel Marie, 4102 Ougrée (BE)
(74) Mandataire: Claeys, Pierre

(57) **Abrégé**

Organe de fixation (1) de dispositif d'entraînement par friction de roue de vélo lequel comprend une première partie (2) reliée audit dispositif d'entraînement (3), de manière à pouvoir pivoter autour d'un premier axe de pivotement (4), et une deuxième partie (5) attachée à la première partie (2), de manière à pouvoir pivoter librement autour d'un deuxième axe de pivotement (6), ladite deuxième partie (5) comprenant une attache (7) située à une distance prédéterminée dudit deuxième axe de pivotement (6), ledit organe de fixation (1) comprenant en outre des moyens d'ajustement agencés pour régler un angle de pivotement de la première partie (2) par rapport à la deuxième partie (5).

## Description

La présente invention est relative à un organe de fixation de dispositif d'entraînement par friction de roue de vélo.

Les systèmes d'entraînement pour vélo proposent une aide pour pédaler au moyen d'un moteur additionnel. Cette aide est généralement constituée d'un mécanisme d'entraînement agencé sur l'une des roues du vélo. Ainsi, la puissance du moteur entraîne la roue et s'additionne à la puissance exercée par la pression sur le pédalier, ce qui permet au cycliste de fournir moins d'efforts.

Un tel système d'entraînement est par exemple illustré dans la demande de brevet européen n° 155.185. Ce système connu est pourvu d'un moteur d'entraînement connecté à l'une des roues du vélo par l'intermédiaire d'une roue d'entraînement.

Malheureusement, la plupart de ces systèmes d'entraînement sont fixés au cadre du vélo de manière soit permanente ou soit non adaptative. Les systèmes de fixation connus, étant prévus pour un type particulier de configuration, ne s'adaptent que très difficilement à un autre type de configuration. Ainsi, lorsqu'un cycliste désire changer de vélo pour un autre vélo ayant une configuration différente ou simplement désire modifier l'emplacement du système d'entraînement sur son vélo, il doit bien souvent changer de système de fixation ou changer de système d'entraînement.

Le but de la présente invention est donc de proposer un organe de fixation de dispositif d'entraînement par friction de roue de vélo permettant de s'adapter aisément à chaque type de vélo conventionnel.

Ce but est atteint par un organe de fixation caractérisé en ce qu'il comprend une première partie reliée audit dispositif d'entraînement, de manière à pouvoir pivoter autour d'un premier axe de pivotement, et une deuxième partie attachée à la première partie, de manière à pouvoir pivoter librement autour d'un deuxième axe de pivotement, ladite deuxième partie comprenant une attache située à une distance prédéterminée dudit deuxième axe de pivotement, ledit organe de fixation comprenant en outre des moyens d'ajustement agencés pour régler un angle de pivotement de la première partie par rapport à la deuxième partie.

Ainsi, cet organe de fixation permet de conserver un premier axe pivotant pour s'adapter au mouvement de la roue par rapport au cadre du vélo, en particulier lorsque cette dernière est amortie. Selon une première forme de réalisation, l'organe de fixation peut s'adapter par simple pivotement à la configuration du cadre, par exemple à l'emplacement du point d'attache ou à celui du dispositif d'entraînement.

Selon une deuxième forme de réalisation, l'organe de fixation peut comprendre au moins un arrêt agencé pour délimiter un angle de débattement entre ledit dispositif d'entraînement et ladite première partie. L'angle de débattement ainsi délimité permet de réduire le risque que le dispositif d'entraînement ne saute en se déconnectant de la roue. Suite à son passage sur une irrégularité de la voie de circulation, le dispositif d'entraînement peut rebondir sur !e pneu du vélo et basculer autour du premier point de pivotement.

D'autres formes de réalisation de structures modulaires suivant l'invention sont indiquées dans les revendications annexées. De plus, d'autres détails et particularités de l'invention ressortiront de la description donnée ci-après, à titre non limitatif et avec référence aux dessins annexés.

Dans les dessins :
La figure 1 illustre schématiquement une forme de réalisation d'un organe de fixation selon l'invention.
La figure 2 illustre schématiquement un organe de fixation, suivant l'invention, fixé sur un premier type de vélo.
La figure 3 illustre schématiquement un organe de fixation, suivant l'invention, fixé sur un second type de vélo.

Dans les dessins, une même référence a été attribuée à un même élément ou à un élément analogue.

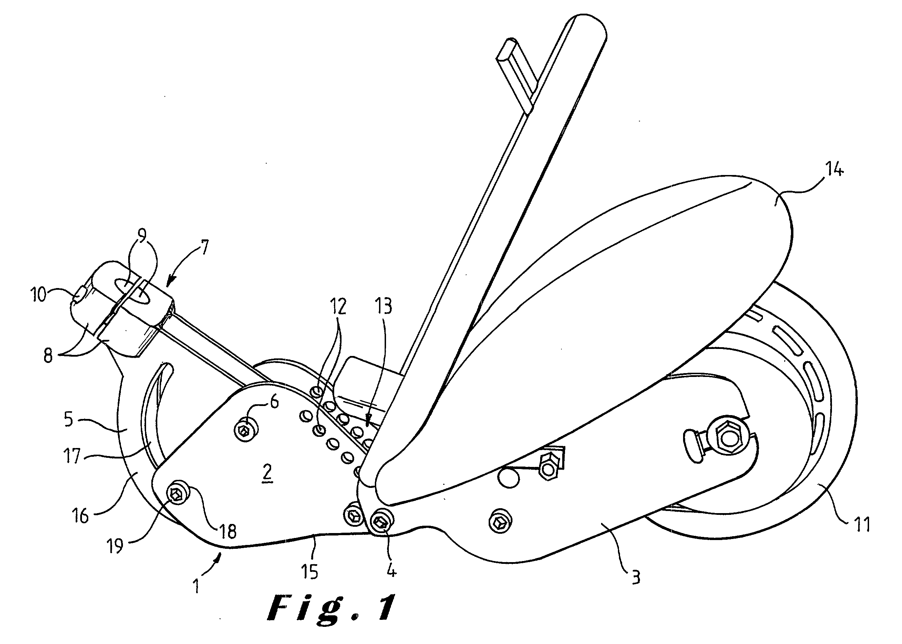

Si l'on se réfère à la figure 1, l'organe de fixation 1 comprend une première partie 2 reliée au dispositif d'entraînement 3 de manière à pouvoir pivoter autour d'un premier axe de pivotement 4. De plus, une deuxième partie 5 est attachée à la première partie, de manière à pouvoir pivoter librement autour d'un deuxième axe de pivotement 6. La deuxième partie comprend aussi une attache 7 située à une distance prédéterminée dudit deuxième axe de pivotement 6.

Cette attache 7 peut comprendre, par exemple, deux blocs 8, le premier bloc comportant une face concave 9 placée face à la face concave du deuxième bloc et ces blocs étant reliés par des moyens de fixation tels que, par exemple, des vis de serrage 10. L'un des blocs peut être solidaire de la deuxième partie de l'organe de fixation.

De manière à fixer l'attache sur une partie du guidon, l'opérateur peut dévisser les vis de serrage de manière à séparer les deux blocs et placer le bloc solidaire de la deuxième partie contre la partie du vélo sur laquelle est fixé l'organe de fixation. Ensuite, l'opérateur peut placer l'autre bloc à l'opposé et visser les vis de serrage de manière à fixer les deux blocs autour de la partie du guidon. De même, la forme des côtés des blocs, entrant en contact avec le vélo, peut varier de manière à épouser au mieux les pourtours de l'endroit sur lequel l'attache sera fixée.

Dans ce mode de réalisation, le dispositif d'entraînement est composé d'un moteur 21 relié à une roue d'entraînement par une courroie, la roue d'entraînement agissant sur le pneu du vélo en lui communiquant son mouvement par friction.

Selon une autre forme de réalisation de l'invention, le premier et le deuxième axe de pivotement peuvent être coaxiaux le long du bord proche du dispositif d'entraînement. Ainsi, un seul axe pourrait servir de pivot pour le débattement entre le dispositif d'entraînement et l'ensemble constitué de la première et de la deuxième partie. Cette forme de réalisation pourrait s'avérer plus économique à la fabrication.

De plus, la première partie 2 de l'organe de fixation peut aussi comprendre une série de trous 12 proche du dispositif d'entraînement. Ces trous permettent un réglage supplémentaire pour placer le dispositif d'entraînement. En effet, ces trous permettent d'ajuster la longueur entre l'attache et le dispositif d'entraînement de manière à placer au mieux la roue d'entraînement sur le pneu du vélo selon la configuration du vélo.

De plus, l'organe de fixation peut aussi comprendre au moins un arrêt agencé pour délimiter un angle de débattement entre ledit dispositif d'entraînement et ladite première partie. Dans le mode de réalisation illustré sur la figure 1 l'organe de fixation comprend deux arrêts, le premier arrêt 13 étant l'un des côtés même de la première partie de l'organe de fixation et le deuxième arrêt 15 étant situé sur l'autre côté de l'organe de fixation.

Ainsi, lorsque le dispositif d'entraînement rebondit, par exemple suite à une bosse rencontrée par la roue, il bascule autour du premier axe de pivotement, de manière à être stoppé par le premier arrêt 13. Dans ce cas-ci, en effet, lors de la rotation autour du premier axe de rotation, la coque 14 du dispositif d'entraînement rencontre le côté 13 qui le stoppe dans son mouvement rotatoire et permet au dispositif d'entraînement de retomber vers la roue par gravité.

De même, l'organe de fixation pourra être aussi pourvu d'un moyen élastique qui forcerait, avec un certain degré de liberté, le dispositif d'entraînement à rester essentiellement en contact avec la roue.

Le deuxième arrêt 15 permet au dispositif d'entraînement, lorsque la roue s'écrase ou se dérobe violemment sous le dispositif d'entraînement, d'être stoppé suivant un certain angle de débattement de manière à ce que lorsque !a roue reviendra à sa position initiale, le dispositif d'entraînement ne vienne rencontrer la roue trop violemment. Par exemple, si l'inclinaison du dispositif d'entraînement par rapport à l'axe de débattement de la roue était de 90° ou plus, la rencontre entre la roue et le dispositif d'entraînement pourrait provoquer des contraintes importantes dans le premier axe de pivotement qui pourrait le tordre ou le casser.

De plus, l'organe de fixation comprend aussi des moyens d'ajustement 16 qui comprennent, sur l'une des partie de l'organe de fixation, par exemple sur la deuxième partie 5, au moins un premier orifice 17 s'étendant selon un arc de courbure ayant pour centre le deuxième axe de pivotement 6 et un second orifice 18, par exemple situé sur la première partie 2 de l'organe de fixation. Ce second orifice 18 est agencé pour se placer en face d'un desdits au moins un premier orifice. En outre, un moyen de maintien est agencé pour s'engager dans le premier orifice 17 et dans le second orifice 18 pour maintenir ainsi les deux parties solidaires l'une de l'autre. Dans ce cas-ci, le moyen de maintien 19 comprend un écrou et une vis.

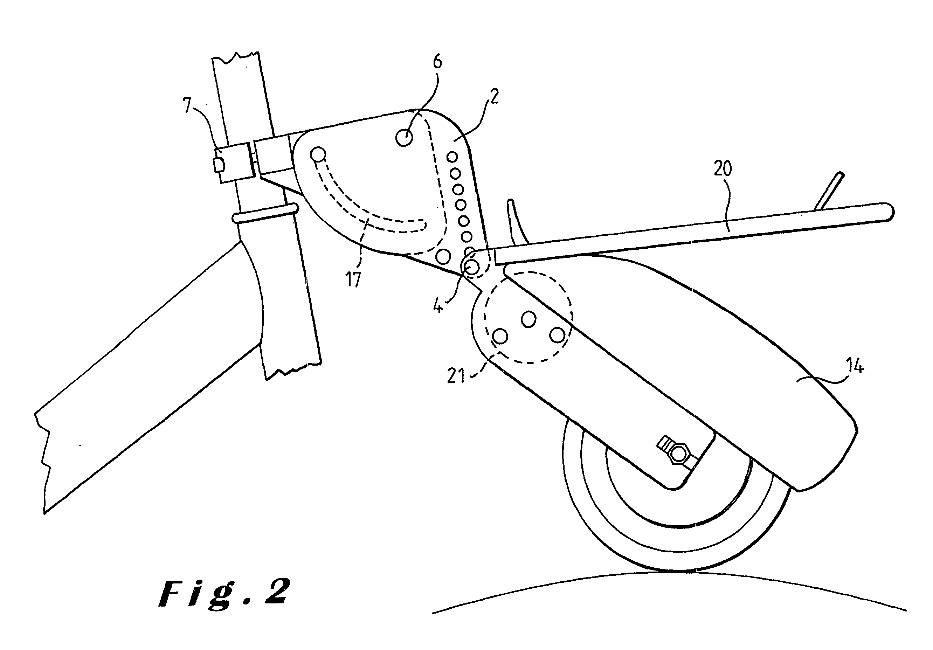

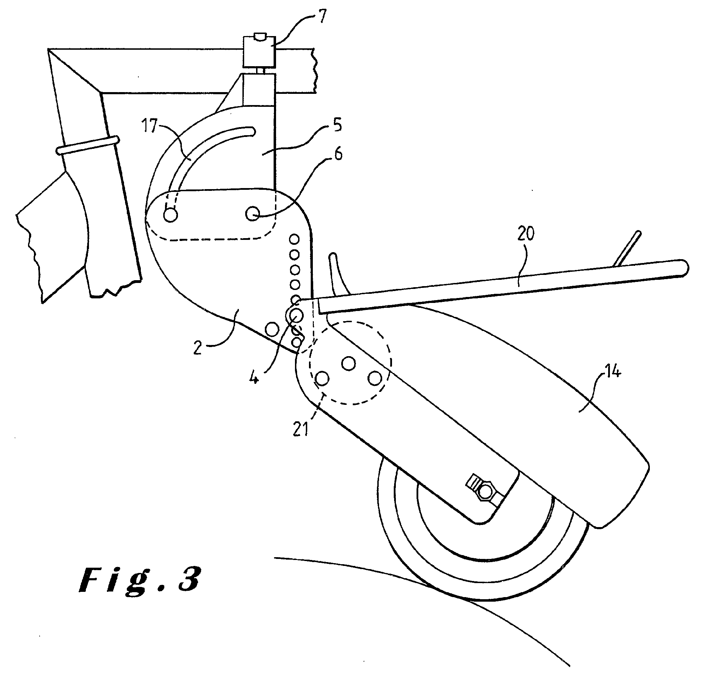

Comme illustré aux figures 2 et 3, l'organe de fixation peut s'adapter à différentes configurations de vélo. Ainsi, comme représenté sur la figure 2, l'organe de fixation permet d'attacher le dispositif d'entraînement sur une barre sensiblement verticale d'un vélo. II est également possible, comme représenté sur la figure 3, d'attacher l'organe de fixation sur une barre sensiblement horizontale du vélo.

De manière à régler l'angle de pivotement de la première partie par rapport à la deuxième, le cycliste fait pivoter autour du deuxième axe de pivotement la deuxième partie de l'organe de fixation. Ensuite, le moyen de fixation, dans ce cas-ci un écrou et une vis, est serré de manière à appuyer la première partie sur la deuxième ce qui solidarise ensemble ces deux parties.

En outre, le dispositif d'entraînement peut comprendre une coque pourvue d'un porte-bagages 20, le porte-bagages étant de préférence agencé pour transporter un sac déposé à cheval sur le porte-bagages. Le sac peut comprendre par exemple deux emplacements, chacun agencé pour contenir par exemple des batteries alimentant le moteur du dispositif d'entraînement. Lorsque le sac est placé à cheval sur le porte-bagages, les batteries seront placées de manière à équilibrer le poids de part et d'autre du dispositif d'entraînement.

## Revendications

1. Organe de fixation (1) de dispositif d'entraînement par friction de roue de vélo **caractérisé en ce qu'**il comprend une première partie (2) reliée audit dispositif d'entraînement (3), de manière à pouvoir pivoter autour d'un premier axe de pivotement (4), et une deuxième partie (5) attachée à la première partie (2), de manière à pouvoir pivoter librement autour d'un deuxième axe de pivotement (6), ladite deuxième partie (5) comprenant une attache (7) située à une distance prédéterminée dudit deuxième axe de pivotement (6), ledit organe de fixation (1) comprenant en outre des moyens d'ajustement agencés pour régler un angle de pivotement de la première partie (2) par rapport à la deuxième partie (5).

2. Organe de fixation suivant la revendication 1, **caractérisé en ce qu'**il comprend au moins un arrêt (13), agencé pour délimiter un angle de débattement entre ledit dispositif d'entraînement et ladite première partie.

3. Organe de fixation suivant l'une des revendications 1 à 2, **caractérisé en ce que** le premier (4) et le deuxième (6) axe de pivotement sont coaxiaux.

4. Organe de fixation suivant l'une des revendications 1 à 3, **caractérisé en ce que** lesdits moyens d'ajustement (16) comprennent, sur l'une des partie de l'organe de fixation, au moins un premier orifice (17) s'étendant selon un arc de courbure ayant pour centre le deuxième axe de pivotement (6), et, sur l'autre partie, un second orifice (18) situé en face d'au moins un desdits au moins un premier orifice (17), ainsi qu'un moyen de maintien (19) agencé pour s'engager dans ledit au moins un premier orifice (17) et ledit second orifice (18) et pour maintenir ainsi les deux dites parties solidaires l'une de l'autre.

5. Organe de fixation suivant l'une des revendications 1 à 4, **caractérisé en ce que** ledit dispositif d'entraînement (3) comprend un moteur (21) agencé pour entraîner en rotation une roue d'entraînement pouvant agir par friction sur la roue du vélo.
